(19) **Europäisches Patentamt**
**European Patent Office**
**Office européen des brevets**

(11) **EP 4 614 192 A1**

(12) **EUROPEAN PATENT APPLICATION**
published in accordance with Art. 153(4) EPC

(43) Date of publication:
**10.09.2025 Bulletin 2025/37**

(21) Application number: **23909400.6**

(22) Date of filing: **26.09.2023**

(51) International Patent Classification (IPC):
**G01S 19/42** (2010.01)     **G01C 21/20** (2006.01)
**G01C 21/16** (2006.01)

(86) International application number:
**PCT/CN2023/121377**

(87) International publication number:
**WO 2024/139465 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 CN 202211701501**

(71) Applicant: **Tencent Technology (Shenzhen)
Company Limited
Shenzhen, Guangdong 518057 (CN)**

(72) Inventors:
• **ZHANG, Xin**
  **Shenzhen, Guangdong 518057 (CN)**
• **YANG, Zhanduo**
  **Shenzhen, Guangdong 518057 (CN)**
• **CHENG, Yuhang**
  **Shenzhen, Guangdong 518057 (CN)**
• **LI, Xin**
  **Shenzhen, Guangdong 518057 (CN)**
• **LIU, Chang**
  **Shenzhen, Guangdong 518057 (CN)**

(74) Representative: **EP&C
P.O. Box 3241
2280 GE Rijswijk (NL)**

(54) **POSITIONING INFORMATION PROCESSING METHOD AND APPARATUS, AND DEVICE AND MEDIUM**

(57)     A positioning information processing method is provided. The method is performed by a computer device and includes: obtaining satellite information corresponding to a pre-defined object, the satellite information being provided by a pre-defined satellite for positioning the pre-defined object, and a sensor being disposed on the pre-defined object (202); obtaining sensor information acquired by the sensor for the pre-defined object (204); performing first feature extraction on the satellite information to obtain a satellite-related feature (206); performing second feature extraction on the sensor information to obtain a sensor-related feature (208); and predicting positioning accuracy of the pre-defined satellite based on the satellite-related feature and the sensor-related feature (210).

Obtain satellite information corresponding to a target object, the satellite information being provided by a target satellite for positioning the target object, and a sensor being disposed on the target object — 202

Obtain sensor information acquired by the sensor for the target object — 204

Perform feature extraction on the satellite information to obtain a satellite feature — 206

Perform feature extraction on the sensor information to obtain a sensor feature — 208

Predict positioning accuracy of the target satellite based on the satellite feature and the sensor feature — 210

FIG. 2

EP 4 614 192 A1

**Description**

RELATED APPLICATION

This application claims priority to Chinese Patent Application No. 2022117015013, filed on December 29, 2022 and entitled "POSITIONING INFORMATION PROCESSING METHOD AND APPARATUS, DEVICE, AND MEDIUM", which is incorporated herein by reference in its entirety.

FIELD OF THE TECHNOLOGY

This application relates to the field of satellite positioning technologies, the field of electronic map technologies, and the field of artificial intelligence (AI) technologies, and in particular, to a positioning information processing method and apparatus, a device, and a medium.

BACKGROUND OF THE DISCLOSURE

A satellite positioning system is a technology that uses satellites to accurately position target objects. The satellite positioning technology enables a plurality of satellites to be observed simultaneously at any moment and at any point on the earth, to achieve navigation and positioning functions. The satellite positioning technology may be widely applied to different scenarios with positioning requirements. For example, satellite positioning may be used to guide aircraft, ships, vehicles, and individuals to safely and accurately follow selected routes and reach destinations on time. However, in many cases, satellite positioning cannot provide accurate positioning. For example, cloudy days, thick clouds, and lightning affect satellite signals, surrounding buildings and dense mountains and forests affect satellite signals, and signal reception is affected in basements and tunnels, and under overpasses. In these cases, positioning information provided by the satellite may be inaccurate. Therefore, accuracy of satellite positioning needs to be determined to determine reliability of satellite positioning.
In the conventional art, accuracy information received from the satellite is usually directly determined as final positioning accuracy of satellite positioning. However, the accuracy information directly provided by the satellite usually cannot reflect true positioning accuracy of the satellite, resulting in low accuracy of the obtained positioning accuracy of the satellite.

SUMMARY

According to various embodiments of this application, a positioning information processing method and apparatus, a device, and a medium are provided.
According to a first aspect, this application provides a positioning information processing method, performed by a computer device, the method including:

obtaining satellite information corresponding to a pre-defined object, the satellite information being provided by a pre-defined satellite for positioning the pre-defined object;

obtaining sensor information acquired by a sensor disposed on pre-defined object;

performing first feature extraction on the satellite information to obtain a satellite-related feature;

performing second feature extraction on the sensor information to obtain a sensor-related feature; and

predicting positioning accuracy of the pre-defined satellite based on the satellite-related feature and the sensor-related feature.

According to a second aspect, this application provides a positioning information processing apparatus, including:

an obtaining module, configured to: obtain satellite information corresponding to a pre-defined object, the satellite information being provided by a pre-defined satellite for positioning the pre-defined object, and a sensor being disposed on the pre-defined object; and obtain sensor information acquired by the sensor for the pre-defined object;

a feature extraction module, configured to: perform first feature extraction on the satellite information to obtain a satellite-related feature; and perform second feature extraction on the sensor information to obtain a sensor-related feature; and

a prediction module, configured to predict positioning accuracy of the pre-defined satellite based on the satellite-related feature and the sensor-related feature.

According to a third aspect, this application provides a computer device, including a memory and a processor, the memory having computer-readable instructions stored therein, the processor, when executing the computer-readable instructions, implementing the operations in the method embodiments of this application.

According to a fourth aspect, this application provides a computer-readable storage medium, having computer-readable instructions stored therein, the computer-readable instructions, when executed by a processor, implementing the operations in the method embodiments of this application.

According to a fifth aspect, this application provides a computer program product, having computer-readable instructions stored therein, the computer-readable instructions, when executed by a processor, implementing the operations in the method embodiments of this application.

Details of one or more embodiments of this application are provided in the accompanying drawings and descriptions below. Other features and advantages of this application are illustrated in the specification, the accompanying drawings, and the claims.

BRIEF DESCRIPTION OF THE DRAWINGS

To describe the technical solutions in the embodiments of this application or the conventional technology more clearly, the following briefly describes the accompanying drawings required for describing the embodiments or the conventional technology. Apparently, the accompanying drawings in the following description show merely the embodiments of this application, and a person of ordinary skill in the art may derive other drawings from these accompanying drawings without creative efforts.

FIG. 1 is a diagram of an application environment of a positioning information processing method according to an embodiment.

FIG. 2 is a schematic flowchart of a positioning information processing method according to an embodiment.

FIG. 3 is a schematic flowchart of determining a satellite distribution feature according to an embodiment.

FIG. 4 is a schematic diagram of distributions of target satellites in quadrants on a plane according to an embodiment.

FIG. 5 is a schematic flowchart of a positioning information processing method according to another embodiment.

FIG. 6 is a schematic diagram of a comparison between a prediction error, a true error, and a satellite-given error according to an embodiment of this application.

FIG. 7 is a schematic flowchart of a positioning information processing method according to yet another embodiment.

FIG. 8 is a structural block diagram of a positioning information processing apparatus according to an embodiment.

FIG. 9 is a structural block diagram of a positioning information processing apparatus according to another embodiment.

FIG. 10 is a diagram of an internal structure of a computer device according to an embodiment.

DESCRIPTION OF EMBODIMENTS

The technical solutions in the embodiments of this application are clearly and completely described below with reference to accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

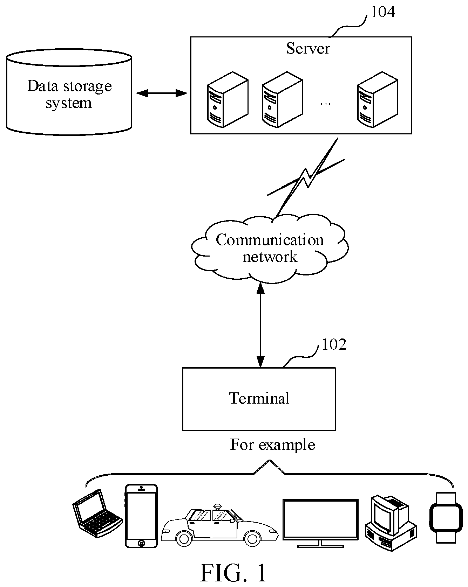

A positioning information processing method provided in this application may be applied to an application environment shown in FIG. 1. A terminal 102 communicates with a server 104 through a network. A data storage system may store data that the server 104 needs to process. The data storage system may be integrated on the server 104, or placed on a cloud or another server. The terminal 102 may be, but not limited to, a desktop computer, a notebook computer, a smart phone, a tablet computer, an Internet of Things device, and a portable wearable device. The Internet of Things device may be a smart speaker, a smart television, a smart air conditioner, a smart in-vehicle device, or the like. The portable wearable device may be a smart watch, a smart band, a head-mounted device, or the like. The server 104 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, network security services such as cloud security and host security, a CDN, big data, and an artificial intelligence platform. The terminal 102 and the server 104 may be directly or indirectly connected in a wired or wireless communication manner. This is not limited in this application.

The terminal 102 may obtain satellite information corresponding to a pre-defined object, the satellite information being provided by a pre-defined satellite for positioning the pre-defined object, and a sensor being disposed on the pre-defined object. The terminal 102 may obtain sensor information acquired by the sensor for the pre-defined object. The terminal 102 may perform first feature extraction on the satellite information to obtain a satellite-related feature. The terminal 102 may perform second feature extraction on the sensor information to obtain a sensor-related feature. The terminal 102 may predict positioning accuracy of the pre-defined satellite based on the satellite-related feature and the sensor-related feature.

The terminal 102 may use the predicted positioning accuracy as a fusion reference parameter, to fuse sensor positioning information and satellite positioning information in the satellite information, to obtain fused positioning information of the pre-defined object. The sensor positioning information is obtained by performing positioning prediction on the pre-defined object based on the sensor information. The terminal 102 may send the predicted positioning accuracy to the server 104, and the server 104 may use positioning accuracy as a fusion reference parameter, to fuse the sensor positioning information and the satellite positioning information in the satellite information, to obtain fused positioning information of the pre-defined object, and send the fused positioning information to the terminal 102. This is not limited in this embodiment. The application scenario in FIG. 1 is merely for schematic illustration and is not limited thereto.

The positioning information processing method in some embodiments of this application uses an artificial intelligence technology. For example, availability prediction on the satellite positioning information is implemented by using the artificial intelligence technology, and the positioning accuracy of the pre-defined satellite is also obtained through prediction by using the artificial intelligence technology.

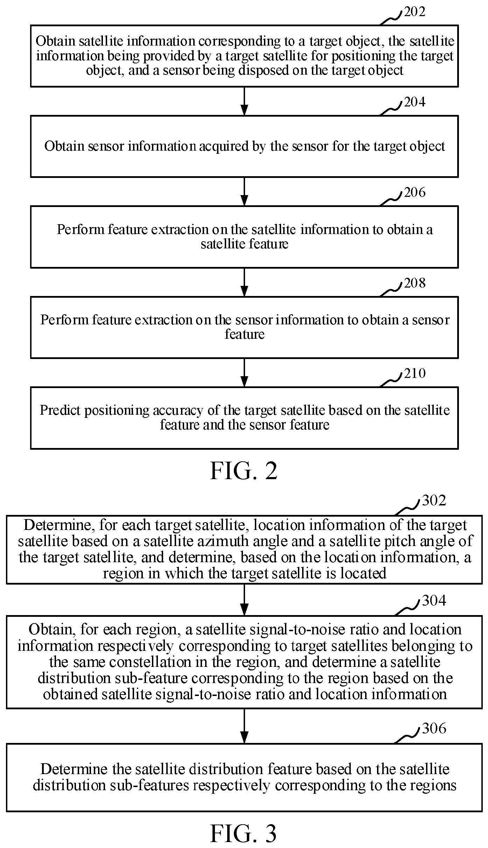

In an embodiment, as shown in FIG. 2, a positioning information processing method is provided. In this embodiment, an example in which the method is applied to the terminal 102 shown in FIG. 1 is used for description. The method includes the following operations.

Operation 202: Obtain satellite information corresponding to a pre-defined object, the satellite information being provided by a pre-defined satellite for positioning the pre-defined object. In embodiments of the present application, the pre-defined object can be a target object. In embodiments of the present application, the pre-defined object can be a target object. In embodiments of the present application, operation 202 can include obtaining satellite information corresponding to a target object, the satellite information being provided by a target satellite for positioning the target object, and a sensor being disposed on the target object.

The object is an entity having a movement function, and the terminal may be deployed on the object. For example, the object may be a vehicle or a person. If the object is a vehicle, the terminal may be deployed on the vehicle. If the object is a person, the terminal may be carried by the person. The satellite information is information provided by the pre-defined satellite for positioning the pre-defined object.

The pre-defined object is a specific object, specifically, an object targeted by the positioning information processing method of this application. The pre-defined satellite is a specific satellite, specifically, a satellite for positioning the pre-defined object. When the terminal is disposed on or carried by an object, the object is the pre-defined object, and a satellite that positions the object is the pre-defined satellite.

A sensor is disposed on the pre-defined object. For example, when the pre-defined object is a vehicle, the sensor may be disposed on the vehicle. When the pre-defined object is a person, the sensor may be carried by the person. In an embodiment, the sensor disposed on the pre-defined object includes at least one of a velocity sensor, a visual sensor, or an inertial sensor.

Specifically, satellites that the terminal may support receiving and the number of satellites are fixed, and the satellites that the terminal may support receiving are used as the pre-defined satellites. Then, the terminal may obtain satellite information provided by at least one pre-defined satellite for positioning the pre-defined object.

Operation 204: Obtain sensor information acquired by the sensor disposed on the pre-defined object. In embodiments of the present application, operation 204 can include obtaining sensor information acquired by the sensor for the target object.

Specifically, a sensor and a terminal are disposed on the pre-defined object. The terminal may perform information acquisition on the pre-defined object through the sensor disposed on the pre-defined object, to obtain sensor information for the pre-defined object. The sensor information for the pre-defined object is information acquired by the sensor when the sensor is disposed on the pre-defined object. Performing information acquisition on the pre-defined object through the sensor is performing information acquisition by the sensor when the sensor is disposed on the pre-defined object. The acquired sensor information is the sensor information for the pre-defined object.

In an embodiment, the sensor disposed on the pre-defined object includes at least one of a velocity sensor, a visual sensor, or an inertial sensor. If the sensor includes a velocity sensor, the sensor information includes velocity information acquired by the velocity sensor. If the sensor includes a visual sensor, the sensor information includes image information acquired by the visual sensor. If the sensor includes an inertial sensor, the sensor information includes acceleration information and angular velocity information acquired by the inertial sensor.

Operation 206: Perform first feature extraction on the satellite information to obtain a satellite-related feature. In embodiments of the present application, operation 206 can include performing feature extraction on the satellite information to obtain a satellite feature.

The satellite-related feature is a feature representing satellite characteristics, and may be a feature obtained by performing feature extraction on the satellite information.

In an embodiment, the satellite information includes at least one of a satellite azimuth angle, a satellite pitch angle, or a satellite signal-to-noise ratio. The terminal may perform feature extraction on at least one of the satellite azimuth angle, the satellite pitch angle, or the satellite signal-to-noise ratio, to obtain the satellite-related feature.

In an embodiment, the satellite information further includes satellite positioning information. The satellite positioning information may include at least one of satellite positioning latitude and longitude information, satellite positioning velocity information, satellite positioning height information, satellite positioning time, a satellite positioning accuracy factor, or a satellite positioning status. The terminal may directly use the satellite positioning information as the satellite-related feature.

Latitude and longitude refer to latitude and longitude, and the satellite positioning latitude and longitude information includes location information, that is represented in terms of latitude and longitude and obtained by positioning the pre-defined object by the satellite. The satellite positioning velocity information is information about a velocity of the pre-defined object obtained by positioning the pre-defined object by the satellite. The satellite positioning time is time at which the satellite performs positioning. The satellite positioning accuracy factor represents accuracy when the satellite positions the pre-defined object. The satellite positioning status may be a status when the satellite positions the pre-defined object.

Operation 208: Perform second feature extraction on the sensor information to obtain a sensor-related feature. In embodiments of the present application, operation 208 can include performing feature extraction on the sensor information to obtain a sensor feature.

The sensor-related feature is a feature representing sensor characteristics, and may be a feature obtained by performing second feature extraction on the sensor information.

In an embodiment, the terminal may directly use the sensor information acquired by the sensor as the sensor-related feature.

In an embodiment, the sensor disposed on the pre-defined object includes at least one of a velocity sensor, a visual sensor, or an inertial sensor. If the sensor includes a velocity sensor, the sensor information includes velocity information acquired by the velocity sensor. If the sensor includes a visual sensor, the sensor information includes image information acquired by the visual sensor. If the sensor includes an inertial sensor, the sensor information includes acceleration information and angular velocity information acquired by the inertial sensor.

In an embodiment, the terminal may obtain map information. The map information may include at least one of lane information, lane line information, or center line information of a lane line. If the sensor includes a visual sensor, the terminal may correct, based on the map information, image information acquired by the visual sensor, to obtain corrected image information as the sensor information.

Operation 210: Predict positioning accuracy of the pre-defined satellite based on the satellite-related feature and the sensor-related feature. In embodiments of the present application, operation 210 can include predicting positioning accuracy of the target satellite based on the satellite feature and the sensor feature.

The positioning accuracy is configured for representing an accuracy degree of the satellite positioning information in the satellite information.

Specifically, the terminal may predict the positioning accuracy of the pre-defined satellite based on the satellite-related feature and the sensor-related feature. The terminal may perform positioning prediction on the pre-defined object based on the sensor information, to obtain the sensor positioning information. Then, the terminal may use the positioning accuracy as a fusion reference parameter, to fuse the sensor positioning information and the satellite positioning information in the satellite information, to obtain fused positioning information of the pre-defined object.

In an embodiment, the predicted positioning accuracy may be configured for fusing the sensor positioning information and the satellite positioning information in the satellite information. The sensor positioning information is obtained by performing positioning prediction on the pre-defined object based on the sensor information. The fused positioning information is used as a final positioning result of the pre-defined object. In this way, more accurate fused positioning information of the pre-defined object can be obtained based on more accurate satellite positioning accuracy, thereby improving the positioning accuracy for the pre-defined object.

In an embodiment, the terminal may determine a fused weight of the satellite positioning information and a fused weight of the sensor positioning information based on the positioning accuracy, to perform weighted fusion on the sensor positioning information and the satellite positioning information in the satellite information, to obtain the fused positioning information of the pre-defined object. The terminal may use the positioning accuracy as the fused weight of the satellite positioning information, and then determine the fused weight of the sensor positioning information based on the positioning accuracy, to perform weighted fusion on the sensor positioning information and the satellite positioning information in the satellite information, to obtain the fused positioning information of the pre-defined object. The determining the fused weight of the sensor positioning information based on the positioning accuracy may be subtracting the positioning accuracy from a preset value, and the preset value may be 1.

In the positioning information processing method, the satellite information corresponding to the pre-defined object is obtained, the satellite information being provided by the pre-defined satellite for positioning the pre-defined object; information acquisition is performed on the pre-defined object through the sensor disposed on the pre-defined object, to obtain the sensor information for the pre-defined object; first feature extraction is performed on the satellite information to obtain the satellite-related feature; second feature extraction is performed on the sensor information to obtain the sensor-related feature; and the positioning accuracy of the pre-defined satellite is predicted based on the satellite-related feature and the sensor-related feature. Because the satellite positioning accuracy is determined in consideration of both the satellite information from the pre-defined satellite and the sensor information from the sensor, compared with the conventional manner of directly determining accuracy information received from the satellite as final positioning accuracy of satellite positioning, more accurate satellite positioning accuracy can be obtained in this application, so that more accurate fused positioning information of the pre-defined object can be obtained based on the more accurate satellite positioning accuracy, thereby improving the positioning accuracy for the pre-defined object.

In an embodiment, the positioning information processing method further includes: fusing the sensor positioning information and the satellite positioning information in the satellite information, to obtain initial fused positioning information of the pre-defined object, the sensor positioning information being obtained by performing positioning prediction on the pre-defined object based on the sensor information; and performing difference comparison analysis on the initial fused positioning information and the satellite positioning information, to obtain a positioning difference feature; and the predicting positioning accuracy of the pre-defined satellite based on the satellite-related feature and the sensor-related feature includes: predicting the positioning accuracy of the pre-defined satellite based on the satellite-related feature, the sensor-related feature, and the positioning difference feature.

The initial fused positioning information is positioning information obtained by fusing the sensor positioning information and the satellite positioning information. The initial fused positioning information is only an intermediate positioning result in a positioning process of the pre-defined object, and is not a final positioning result. More accurate positioning accuracy of the pre-defined satellite may be predicted based on the initial fused positioning information, so that more accurate fused positioning information of the pre-defined object is obtained based on the more accurate positioning accuracy. The fused positioning information is the final positioning result for the pre-defined object. The positioning difference feature is a feature obtained by performing difference comparison analysis on the initial fused positioning information and the satellite positioning information, and is configured for representing a difference between the initial fused positioning information and the satellite positioning information.

Specifically, the terminal may determine initial fused weights respectively corresponding to the sensor positioning information and the satellite positioning information, and fuse the sensor positioning information and the satellite positioning information in the satellite information based on the initial fused weights respectively corresponding to the sensor positioning information and the satellite positioning information, to obtain the initial fused positioning information of the pre-defined object. Then, the terminal may perform difference comparison analysis on the initial fused positioning information and the satellite positioning information, to obtain the positioning difference feature, and predict the positioning accuracy of the pre-defined satellite based on the satellite-related feature, the sensor-related feature, and the positioning difference feature.

In an embodiment, the satellite information includes the satellite positioning accuracy factor, and the terminal may directly use the satellite positioning accuracy factor as the initial fused weight of the satellite positioning information. The terminal may determine the initial fused weight of the sensor positioning information based on the initial fused weight of the satellite positioning information. Then, the terminal may fuse the sensor positioning information and the satellite positioning information in the satellite information based on the initial fused weights respectively corresponding to the sensor positioning information and the satellite positioning information, to obtain the initial fused positioning information of the pre-defined object.

In an embodiment, the initial fused positioning information includes initial fused acceleration information; the satellite positioning information includes satellite positioning acceleration information; and the positioning difference feature includes an acceleration difference feature. The performing difference comparison analysis on the initial fused positioning information and the satellite positioning information, to obtain a positioning difference feature includes: performing acceleration difference comparison analysis on the initial fused acceleration information and the satellite positioning acceleration information, to obtain the acceleration difference feature.

The initial fused acceleration information is information for representing an acceleration of the pre-defined object in the initial fused positioning information, the satellite positioning acceleration information is information for representing an acceleration of the pre-defined object in the satellite positioning information, and the acceleration difference feature is a difference feature for representing an acceleration in the positioning difference feature.

In an embodiment, the initial fused positioning information includes initial fused angular velocity information; the satellite positioning information includes satellite positioning angular velocity information; and the positioning difference feature includes an angular velocity difference feature. The performing difference comparison analysis on the initial fused positioning information and the satellite positioning information, to obtain a positioning difference feature includes: performing angular velocity difference comparison analysis on the initial fused angular velocity information and the satellite positioning angular velocity information, to obtain the angular velocity difference feature.

The initial fused angular velocity information is information for representing an angular velocity of the pre-defined object in the initial fused positioning information, the satellite positioning angular velocity information is information for representing an angular velocity of the pre-defined object in the satellite positioning information, and the angular velocity difference feature is a difference feature for representing an angular velocity in the positioning difference feature.

In the foregoing embodiment, the positioning accuracy of the pre-defined satellite is jointly predicted through the satellite-related feature, the sensor-related feature, and the positioning difference feature obtained by performing difference comparison analysis on the initial fused positioning information and the satellite positioning information, so that the satellite positioning accuracy can be further improved.

In an embodiment, the initial fused positioning information includes initial fused latitude and longitude information; the satellite positioning information includes satellite positioning latitude and longitude information; and the positioning difference feature includes a latitude and longitude difference feature. The performing difference comparison analysis on the initial fused positioning information and the satellite positioning information, to obtain a positioning difference feature includes: performing latitude and longitude difference comparison analysis on the initial fused latitude and longitude information and the satellite positioning latitude and longitude information, to obtain the latitude and longitude difference feature.

The initial fused latitude and longitude information is information for representing latitude and longitude of the pre-defined object in the initial fused positioning information, the satellite positioning latitude and longitude information is information for representing latitude and longitude of the pre-defined object in the satellite positioning information, and the latitude and longitude difference feature is a difference feature for representing latitude and longitude in the positioning difference feature. Latitude and longitude refer to latitude and longitude.

Specifically, the terminal may perform latitude and longitude difference comparison analysis on the initial fused latitude and longitude information and the satellite positioning latitude and longitude information, to obtain the latitude and longitude difference feature. The terminal may determine, based on the initial fused latitude and longitude information and the satellite positioning latitude and longitude information, a distance between a position corresponding to the initial fused latitude and longitude information and a position corresponding to the satellite positioning latitude and longitude information. The distance is the latitude and longitude difference feature.

In an embodiment, if the latitude and longitude of satellite positioning at the same moment are lat1, lon1, and the latitude and longitude of initial fused positioning are lat2, lon2, the difference in latitude and longitude between the initial fused positioning information and the satellite positioning information, that is, the distance between the initial fused latitude and longitude and the satellite positioning latitude and longitude may be calculated through the following formula:

$$\text{dist\_diff} = \text{haversine}\,(\text{lon1}, \text{lat1}, \text{lon2}, \text{lat2}),$$

where

haversine () represents a haversine function, and dist_diff represents the distance between the initial fusion latitude and longitude and the satellite positioning latitude and longitude.

In the foregoing embodiment, latitude and longitude difference comparison analysis is performed on the initial fused latitude and longitude information and the satellite positioning latitude and longitude information, to obtain the latitude and longitude difference feature, and then the positioning accuracy of the pre-defined satellite is jointly predicted through the satellite-related feature, the sensor-related feature, and the latitude and longitude difference feature, so that the satellite positioning accuracy can be further improved.

In an embodiment, the initial fused positioning information includes initial fused velocity information; the satellite positioning information includes satellite positioning velocity information; and the positioning difference feature includes a velocity difference feature. The performing difference comparison analysis on the initial fused positioning information and the satellite positioning information, to obtain a positioning difference feature includes: determining velocity difference information between the initial fused velocity information and the satellite positioning velocity information; and determining the velocity difference feature based on a ratio of the velocity difference information to the initial fused velocity information.

The initial fused velocity information is information for representing a velocity of the pre-defined object in the initial fused positioning information, the satellite positioning velocity information is information for representing a velocity of the pre-defined object in the satellite positioning information, and the velocity difference feature is a difference feature for representing a velocity in the positioning difference feature.

In an embodiment, the terminal may perform velocity difference comparison on the initial fused velocity information and the satellite positioning velocity information to determine the velocity difference information between the initial fused velocity information and the satellite positioning velocity information, and determine the velocity difference feature based on the ratio of the velocity difference information to the initial fused velocity information.

In an embodiment, if the satellite positioning velocity is V1, and the initial fused velocity is V2, the velocity difference feature may be calculated through the following formula:

$$\text{diff\_V} = \text{abs}\,(V1{-}V2)/V2$$

abs () represents an absolute value function, (V1-V2) represents the velocity difference information between the initial fused velocity information and the satellite positioning velocity information, (V1-V2)/V2 represents the ratio of the velocity difference information to the initial fused velocity information, and diff_V represents the velocity difference feature.

In the foregoing embodiment, the velocity difference information between the initial fused velocity information and the satellite positioning velocity information is determined, the velocity difference feature is determined based on the ratio of the velocity difference information to the initial fused velocity information, and then the positioning accuracy of the pre-defined satellite is jointly predicted through the satellite-related feature, the sensor-related feature, and the velocity difference feature, so that the satellite positioning accuracy can be further improved.

In an embodiment, the satellite information includes a satellite azimuth angle, a satellite pitch angle, and a satellite signal-to-noise ratio; the satellite-related feature includes a satellite distribution feature; and the number of pre-defined satellites is two or more. As shown in FIG. 3, the performing first feature extraction on the satellite information to obtain a satellite-related feature includes:

Operation 302: Determine, for each pre-defined satellite, location information of the pre-defined satellite based on a satellite azimuth angle and a satellite pitch angle of the pre-defined satellite, and determine, based on the location information, a region in which the pre-defined satellite is located.

Operation 304: Obtain, for each region, a satellite signal-to-noise ratio and location information respectively corresponding to pre-defined satellites belonging to the same constellation in the region, and determine a satellite distribution sub-feature corresponding to the region based on the obtained satellite signal-to-noise ratio and location information.

Operation 306: Determine the satellite distribution feature based on the satellite distribution sub-features respectively corresponding to the regions.

The satellite distribution sub-feature is a distribution feature corresponding to each region. The satellite distribution feature is a distribution feature corresponding to all regions. One constellation includes a plurality of satellites. The constellation is a set of satellites, and is a satellite network formed by a plurality of satellites configured in a preset manner. The region in which the pre-defined satellite is located is a specific region in which the pre-defined satellite is located, which may be referred to as a target region.

Specifically, for each pre-defined satellite, the terminal may determine the location information of the pre-defined satellite based on the satellite azimuth angle and the satellite pitch angle of the pre-defined satellite, and determine, based on the location information, the region in which the pre-defined satellite is located. For each region, the region may include pre-defined satellites from a plurality of constellations. For each constellation, the terminal may determine, based on satellite signal-to-noise ratios and location information respectively corresponding to pre-defined satellites belonging to the constellation in the region, a satellite distribution sub-feature corresponding to the region and corresponding to the constellation. Then, for each constellation, the terminal may determine a satellite distribution feature corresponding to the constellation based on satellite distribution sub-features respectively corresponding to regions under the constellation. The terminal may splice the satellite distribution features respectively corresponding to the plurality of constellations to obtain the satellite distribution feature corresponding to the pre-defined object. The satellite distribution sub-feature may be in a form of a feature vector, and M N-dimensional satellite distribution sub-features may be spliced to obtain an M*N dimensional satellite distribution feature. Both M and N are positive integers greater than 1.

For example, constellations that the terminal may support receiving include a constellation 1, a constellation 2, and a constellation 3. The number of regions is eight. The satellite distribution features respectively corresponding to the constellation 1, the constellation 2, and the constellation 3 are 8-dimensional feature vectors. Each region corresponds to a one-dimensional feature vector. The terminal may splice the 8-dimensional satellite distribution feature vectors respectively corresponding to the constellation 1, the constellation 2, and the constellation 3 to obtain a satellite distribution feature vector corresponding to a 24-dimensional pre-defined object.

In an embodiment, the satellite information further includes a satellite identifier of the pre-defined satellite. The satellite identifier is in a correspondence with the constellation. The satellite identifier of the pre-defined satellite included in each constellation is in a correspondence with the constellation. The correspondence between the satellite identifier and the constellation is as follows:

$$prn <= 32: GPS,$$

$$prn > 32 \ \& \ prn <= 64: SBAS,$$

$$prn > 64 \ \& \ prn <= 96: GLONASS,$$

$$prn >= 193 \ \& \ prn <= 195: QZSS,$$

and

$$prn >= 201 \ \& \ prn <= 235: BEIDOU,$$

where prn represents a satellite identifier, and GPS, SBAS, GLONASS, QZSS, and BEIDOU respectively represent different constellations. For example, a pre-defined satellite with a satellite identifier prn less than or equal to 32 belongs to a GPS constellation, and a pre-defined satellite with a satellite identifier prn greater than 32 and less than or equal to 64 belongs to an SBAS constellation.

In the foregoing embodiment, the region in which each pre-defined satellite is located is determined, the satellite distribution sub-feature corresponding to each region is determined, and then, the satellite distribution feature is determined based on the satellite distribution sub-features respectively corresponding to the regions, so that accuracy of the obtained satellite distribution feature can be improved.

In an embodiment, the region in which the pre-defined satellite is located includes a quadrant in which the pre-defined satellite is located. The determining, for each pre-defined satellite, location information of the pre-defined satellite based on a satellite azimuth angle and a satellite pitch angle of the pre-defined satellite, and determining, based on the location information, a region in which the pre-defined satellite is located includes: projecting, for each pre-defined satellite, the pre-defined satellite onto a plane based on the satellite azimuth angle and the satellite pitch angle of the pre-defined satellite, to obtain location information of the pre-defined satellite on the plane, where the plane includes a plurality of quadrants; and determining, based on the location information of the pre-defined satellite on the plane, a quadrant in which the pre-defined satellite is located on the plane. The plane is a plane onto which the satellite needs to be projected, which may be preset, and is a specific plane, which may be referred to as a target plane. The region in which the pre-defined satellite is located is a specific region, which may be referred to as a target region. The quadrant in which the pre-defined satellite is located is a specific quadrant, which may be referred to as a target quadrant.

Specifically, for each pre-defined satellite, the terminal may project the pre-defined satellite onto the plane based on the satellite azimuth angle and the satellite pitch angle of the pre-defined satellite, to obtain the location information of the pre-defined satellite on the plane. The plane includes a plurality of quadrants. The terminal may determine, based on the location information of the pre-defined satellite on the plane, the quadrant in which the pre-defined satellite is located on the plane. For each quadrant, the satellite distribution sub-feature corresponding to the quadrant is determined based on satellite signal-to-noise ratios and location information respectively corresponding to pre-defined satellites belonging to the same constellation in the quadrant; and the satellite distribution feature is determined based on the satellite distribution sub-features respectively corresponding to the quadrants.

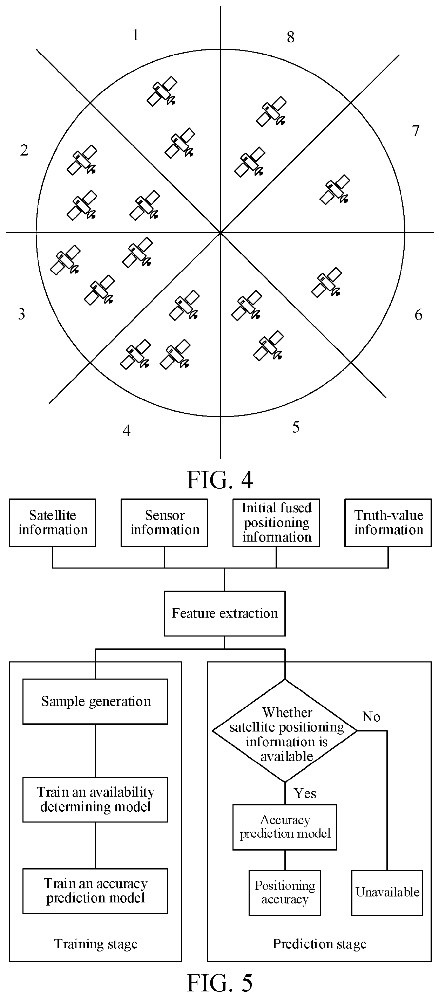

In an embodiment, as shown in FIG. 4, a plane includes eight quadrants. For each pre-defined satellite, the terminal may project the pre-defined satellite onto the plane based on the satellite azimuth angle and the satellite pitch angle of the pre-defined satellite, to obtain the location information of the pre-defined satellite on the plane. Then, the terminal may determine, based on the location information of the pre-defined satellite on the plane, the quadrant in which the pre-defined satellite is located on the plane. For example, there are two pre-defined satellites located in a quadrant 1, a quadrant 5, and a quadrant 8, three pre-defined satellites located in a quadrant 2, a quadrant 3, and a quadrant 4, and one pre-defined satellite located in a quadrant 6 and a quadrant 7.

In an embodiment, the location information of the pre-defined satellite on the plane may include coordinates of the pre-defined satellite on the plane, that is, (px, py), which may be calculated through the following formula:

$$px=\sin(\theta)*(90-\varphi), \quad py=\cos(\theta)*(90-\varphi),$$

where
$\theta$ represents a satellite azimuth angle, and $\varphi$ represents a satellite pitch angle.

In an embodiment, the number of quadrants is eight. For each constellation, for example, the Dipper, and for each quadrant, for example, a first quadrant, a satellite distribution sub-feature corresponding to the first quadrant may be calculated through the following formula:

$$\text{sate\_distribution}_{beidou}^1 = \sum_{i=1}^{k} \frac{SNR_i}{dist_i}$$

$$dist=\text{sqrt}\,(px*px+py*py), \text{ where}$$

sqrt () represents a square root function, dist represents coordinate information calculated based on the coordinates of the pre-defined satellite, k represents the number of pre-defined satellites belonging to the Dipper in the first quadrant, $SNR_i$ represents a satellite signal-to-noise ratio of an $i^{th}$ pre-defined satellite, and $\text{sate\_distribution}_{beidou}^1$ represents a satellite distribution sub-feature corresponding to the Dipper in the first quadrant.

The terminal may perform feature splicing on the satellite distribution features respectively corresponding to the Dipper in the eight quadrants, to obtain the satellite distribution feature corresponding to the Dipper:

$$\text{sate\_distribution}_{beidou}^1, \ldots, \text{sate\_distribution}_{beidou}^8$$

In the foregoing embodiment, the location information of each pre-defined satellite on the plane is obtained by projecting each pre-defined satellite on the plane, and the quadrant in which each pre-defined satellite is located on the plane is determined based on the location information of the pre-defined satellite on the plane. Then, the satellite distribution feature is determined based on the satellite distribution sub-features respectively corresponding to the quadrants, which can further improve the accuracy of the obtained satellite distribution feature.

In an embodiment, the number of pre-defined satellites is two or more. The satellite information includes at least one of a satellite azimuth angle, a satellite pitch angle, or a satellite signal-to-noise ratio. The satellite-related feature includes at least one of a satellite azimuth angle feature, a signal-to-noise ratio mean feature, a signal-to-noise ratio median feature, or a signal-to-noise ratio feature, where the satellite azimuth angle feature is determined based on satellite azimuth angles respectively corresponding to the pre-defined satellites; the signal-to-noise ratio mean feature is determined based on a mean of satellite signal-to-noise ratios respectively corresponding to satellites with a large pitch angle, where the satellite with a large pitch angle is a pre-defined satellite with a satellite pitch angle greater than a preset pitch angle; the signal-to-noise ratio median feature is determined by calculating a median of satellite signal-to-noise ratios respectively corresponding to the pre-defined satellites; and the signal-to-noise ratio feature is determined based on a ratio of a target number to a total number of satellites, where the target number is the number of pre-defined satellites with the satellite signal-to-noise ratio less than a preset signal-to-noise ratio, and the total number of satellites is the number of pre-defined satellites.

In an embodiment, the terminal may determine the satellite azimuth angle feature based on the satellite azimuth angles respectively corresponding to the pre-defined satellites. Specifically, the terminal may calculate a standard deviation of the satellite azimuth angles respectively corresponding the pre-defined satellites to obtain the satellite azimuth angle feature.

For example, if the satellite azimuth angles corresponding to the pre-defined satellites are respectively $\theta_1$, $\theta_2$, $\theta_3$, ..., $\theta_n$, where $\theta_1 \ll \theta_2 \ll \theta_3 \ll \ldots \ll \theta_n$, the satellite azimuth angle feature may be calculated through the following formula:

$$\text{diff\_azimuth\_std}=\text{std}(\text{diff\_angle1}, \text{diff\_angle2}, \ldots, \text{diff\_anglen}-1),$$

$$\text{diff\_angle1} = \theta_2 - \theta_1,$$

$$\text{diff\_angle2} = \theta_3 - \theta_2,$$

$$\ldots$$

$$\text{diff\_anglen} - 1 = \theta_n - \theta_{n-1}.$$

std () represents a standard deviation function, diff_angle represents a difference between the satellite azimuth angles, diff_azimuth_std represents the satellite azimuth angle feature, and n is a constant.

In an embodiment, the terminal may calculate a mean of the satellite signal-to-noise ratios respectively corresponding to the satellites with a large pitch angle, and use the calculated mean as the signal-to-noise ratio mean feature.

For example, if the satellite pitch angles corresponding to the pre-defined satellites are respectively $\varphi_1$, $\varphi_2$, $\varphi_3$, ..., $\varphi_n$, and a preset pitch angle is 60°, the terminal may determine the satellite pitch angle greater than 60° from the satellite pitch angles as a satellite with a large pitch angle. The satellite signal-to-noise ratios corresponding to the satellites with a large pitch angle are respectively $SNR_1$, $SNR_2$, $SNR_3$, ..., and $SNR_m$. The signal-to-noise ratio mean feature may be calculated through the following formula:

$$\text{high\_elevation\_snr\_mean} = \text{mean}\,(SNR_1, SNR_2, SNR_3, ..., SNR_m)$$

where mean() is a mean function, high_elevation_snr_mean is the signal-to-noise ratio mean feature, n and m are constants, and n is greater than or equal to m.

In an embodiment, the terminal may calculate a median of the satellite signal-to-noise ratios respectively corresponding to the pre-defined satellites, and use the calculated median as the signal-to-noise ratio median feature.

For example, if the satellite signal-to-noise ratios corresponding to the pre-defined satellites are respectively SNR1, SNR2, SNR3, ..., and SNRn, the signal-to-noise ratio median feature may be calculated through the following formula:

$$\text{median\_snr\_feature} = \text{median}\,(SNR1, SNR2, SNR3, ..., SNRn)$$

where median() represents a median function, median_snr_feature represents the signal-to-noise ratio median feature, and n is a constant.

In an embodiment, the terminal may determine a ratio of the target number to the total number of satellites, and use the determined ratio as the signal-to-noise ratio feature.

In an embodiment, the preset signal-to-noise ratio includes a first preset signal-to-noise ratio and a second preset signal-to-noise ratio. The target number includes a first target number with the satellite signal-to-noise ratio less than the first preset signal-to-noise ratio, and a second target number with the satellite signal-to-noise ratio less than the second preset signal-to-noise ratio. The terminal may determine a ratio of the first target number to the total number of satellites, and use the determined ratio as the signal-to-noise ratio feature; and determine a ratio of the second target number to the total number of satellites, and use the determined ratio as the signal-to-noise ratio feature.

For example, the first preset signal-to-noise ratio is 30 db, the second preset signal-to-noise ratio is 40 db, and the target number includes a first target number N1 with the satellite signal-to-noise ratio less than 30 db, and a second target number N2 with the satellite signal-to-noise ratio less than 40 db. If the total number of satellites is N, the signal-to-noise ratio feature may be calculated through the following formula:

$$\text{percentage\_less\_than\_30db} = N1/N, \text{percentage\_less\_than\_40db} = N2/N,$$

where percentage_less_than_30db represents a signal-to-noise ratio feature corresponding to 30 db, and percentage_less_than_40db represents a signal-to-noise ratio feature corresponding to 40 db.

In the foregoing embodiment, various types of satellite information are obtained, and various types of satellite-related features are respectively obtained through the various types of satellite information. Then, the positioning accuracy of the pre-defined satellite is predicted based on the sensor-related feature and the rich satellite-related features, so that prediction accuracy of the positioning accuracy of the pre-defined satellite can be further improved.

In an embodiment, the positioning information processing method further includes: performing availability prediction on the satellite positioning information based on the satellite-related feature and the sensor-related feature; and performing the operation of predicting positioning accuracy of the pre-defined satellite based on the satellite-related feature and the sensor-related feature in a case that an availability prediction result represents the satellite positioning information being available.

Specifically, the terminal may perform availability prediction on the satellite positioning information based on the satellite-related feature and the sensor-related feature, to obtain an availability prediction result. The availability prediction result includes the satellite positioning information being available and the satellite positioning information being unavailable. The satellite positioning information being available indicates that the satellite positioning information is more accurate, and the satellite positioning information being unavailable indicates that the satellite positioning information is less accurate. In a case that the availability prediction result represents the satellite positioning information being available, the terminal may predict positioning accuracy of the pre-defined satellite based on the satellite-related feature and the sensor-related feature, and use the positioning accuracy as a fusion reference parameter, to fuse the sensor positioning information and the satellite positioning information in the satellite information, to obtain fused positioning information of the pre-defined object. In a case that the availability prediction result represents the satellite positioning information being unavailable, the terminal may directly determine the sensor positioning information as fused positioning information of the pre-defined object.

In the foregoing embodiment, availability prediction is first performed on the satellite positioning information based on the satellite-related feature and the sensor-related feature, to determine whether the satellite positioning information is available, that is, to preliminarily determine the positioning accuracy of the satellite positioning information. Then, in a case that the availability prediction result represents the satellite positioning information being available, it indicates that the satellite positioning information is more accurate. Then, the positioning accuracy of the pre-defined satellite is predicted based on the satellite-related feature and the sensor-related feature, so that the prediction accuracy of the positioning accuracy of the pre-defined satellite can be further improved.

In an embodiment, the availability prediction result is obtained through prediction by an availability determining model, and the availability determining model is obtained through training based on a first training sample. The first training sample includes a plurality of groups of positive samples and a plurality of groups of negative samples, where each group of positive samples includes positive sample satellite information and corresponding positive sample sensor information; a long-distance difference condition is met between positive sample satellite positioning information in the positive sample satellite information and reference positioning information; the positive sample sensor information is sensor information acquired within a first target time period; and the first target time period is a time period from a time point at which satellite information is previously acquired to a time point at which the positive sample satellite information is acquired; and each group of negative samples includes negative sample satellite information and corresponding negative sample sensor information; a first close-distance difference condition is met between negative sample satellite positioning information in the negative sample satellite information and the reference positioning information; the negative sample sensor information is sensor information acquired within a second target time period; and the second target time period is a time period from a time point at which satellite information is previously acquired to a time point at which the negative sample satellite information is acquired.

The reference positioning information is positioning information for the pre-defined object provided by a true-value device disposed on the pre-defined object.

In an embodiment, the long-distance difference condition may be a distance between the positive sample satellite positioning information and the reference positioning information being greater than a first preset distance threshold. For example, if the first preset distance threshold is 2 meters, the long-distance difference condition may be the distance between the positive sample satellite positioning information and the reference positioning information being greater than 2 meters. The first close-distance difference condition may be the distance between the positive sample satellite positioning information and the reference positioning information being less than a second preset distance threshold. For example, if the second preset distance threshold is 1 meter, the first close-distance difference condition may be the distance between the positive sample satellite positioning information and the reference positioning information being less than 1 meter.

In an embodiment, the long-distance difference condition may alternatively be the distance between the positive sample satellite positioning information and the reference positioning information falling within a first preset distance range. The first close-distance difference condition may alternatively be the distance between the positive sample satellite positioning information and the reference positioning information falling within a second preset distance range. Each distance value in the first preset distance range is greater than each distance value in the second preset distance range.

In the foregoing embodiment, the availability determining model is trained through the first training sample including the plurality of groups of positive samples and the plurality of groups of negative samples, so that the availability determining accuracy of the availability determining model can be improved.

In an embodiment, each group of positive samples further includes positive sample fused positioning information; the positive sample fused positioning information is obtained by fusing positive sample sensor positioning information and the positive sample satellite positioning information; and the positive sample sensor positioning information is obtained by performing positioning prediction on the pre-defined object based on the positive sample sensor information. Each group of negative samples further includes negative sample fusion positioning information; the negative sample fused positioning information is obtained by fusing negative sample sensor positioning information and the negative sample satellite positioning information; and the negative sample sensor positioning information is obtained by performing positioning prediction on the pre-defined object based on the negative sample sensor information.

In an embodiment, the availability determining model may be modeled by xgboost (a decision tree), or may be modeled by random forest. This is not limited in this embodiment. A parameter modeled by xgboost may include at least one of the following: booster, objective, gamma, max_depth, lambda, subsample, colsample_bytree, min_child_weight, silent, eta, seed, nthread, or scale_pos_weight.

In an embodiment, after modeling of the availability determining model by xgboost (the decision tree) is completed, that is, training of the availability determining model ends, the availability determining model may include a plurality of trees. The terminal may input the satellite-related feature, the sensor-related feature, and the positioning difference feature into the trained availability determining model, so that the satellite-related feature, the sensor-related feature, and the positioning difference feature correspond to one leaf node in each tree, and each leaf node corresponds to one score. The terminal may add up the scores corresponding to the trees, and determine, based on the score after the addition, whether the satellite positioning information is available.

In the foregoing embodiment, the positive samples and the negative samples in the first training sample for training the availability determining model is further defined, that is, each group of positive samples further includes positive sample fused positioning information, and each group of negative samples further includes fused negative sample positioning information, so that the availability determining accuracy of the availability determining model can be further improved.

In an embodiment, the positioning accuracy is obtained through prediction by a trained accuracy prediction model. The accuracy prediction model is obtained through a training operation of the accuracy prediction model; and the training operation of the accuracy prediction model includes: obtaining a second training sample, where the second training sample includes a plurality of groups of target samples; each group of target samples includes sample satellite information and corresponding sample sensor information; a second close-distance difference condition is met between sample satellite positioning information in the sample satellite information and reference positioning information; the sample sensor information is sensor information acquired within a third target time period; and the third target time period is a time period from a time point at which satellite information is previously acquired to a time point at which the sample satellite information is acquired; predicting positioning accuracy of the pre-defined satellite based on the second training sample through a to-be-trained accuracy prediction model, to obtain predicted positioning accuracy; and updating a model parameter of the to-be-trained accuracy prediction model based on a difference between the predicted positioning accuracy and the reference positioning accuracy, to iteratively train the to-be-trained accuracy prediction model, where the reference positioning accuracy is determined based on a difference between the sample satellite positioning information and the reference positioning information.

Specifically, the terminal may obtain the second training sample, and input the second training sample to the to-be-trained accuracy prediction model, to predict, the positioning accuracy of the pre-defined satellite based on the second training sample through the to-be-trained accuracy prediction model, to obtain predicted positioning accuracy. Then, the terminal may determine a loss value based on a difference between the predicted positioning accuracy and the reference positioning accuracy, and update the model parameter of the to-be-trained accuracy prediction model based on the loss value, to iteratively train the to-be-trained accuracy prediction model, to obtain a trained accuracy prediction model.

In an embodiment, the second close-distance difference condition may be the distance between the positive sample satellite positioning information and the reference positioning information being less than a third preset distance threshold. For example, if the third preset distance threshold may alternatively be 2 meters, the second close-distance difference condition may be the distance between the positive sample satellite positioning information and the reference positioning information being less than 2 meters.

In an embodiment, the second close-distance difference condition may alternatively be the distance between the positive sample satellite positioning information and the reference positioning information falling within a third preset distance range.

In an embodiment, the accuracy prediction model may be modeled through a deep neural network. For example, a deep neural network is as follows: A total of four layers are included. A first layer is a fully connected layer with 40 neurons, and an activation function is relu (a noise linear rectification function). A second layer and a third layer are fully connected layers with 10 neurons, and the activation function is relu. A fourth layer is an output layer, which is a fully connected layer with 1 neuron, and the activation function is linear (a linear function). An optimizer used is an Adam (adaptive moment prediction) optimizer, and an objective function of regression is mean_squared_error (a mean squared error loss function).

In an embodiment, after modeling of the accuracy prediction model through the deep neural network is completed, that is, training of the accuracy prediction model ends, the terminal may input the satellite-related feature, the sensor-related feature, and the positioning difference feature into the trained accuracy prediction model, and perform feature extraction and feature combination on the inputted satellite-related feature, sensor-related feature, and positioning difference feature through the fully connected layers in the accuracy prediction model, so that the positioning accuracy of the pre-defined satellite can be predicted based on a combined feature.

In the foregoing embodiment, the accuracy prediction model is trained through the second training sample including the plurality of groups of target samples. In addition, during training of the accuracy prediction model, the model parameter of the accuracy prediction model is updated through the difference between the predicted positioning accuracy and the reference positioning accuracy, to iteratively train the accuracy prediction model, so that the prediction accuracy of the positioning accuracy of the accuracy prediction model can be improved.

In an embodiment, each group of target samples further includes sample fused positioning information; the sample fused positioning information is obtained by fusing sample sensor positioning information and the sample satellite positioning information; and the sample sensor positioning information is obtained by performing positioning prediction on the pre-defined object based on the sample sensor information.

In the foregoing embodiment, the target sample included in the second training sample for training the accuracy prediction model is further defined, that is, the target sample further includes the sample fused positioning information, so that the prediction accuracy of the positioning accuracy of the accuracy prediction model can be further improved.

In an embodiment, the pre-defined object is an autonomous vehicle in an autonomous driving scenario. The sensor is a vehicle sensor disposed on the autonomous vehicle. The vehicle sensor includes at least one of a vehicle velocity sensor, a vehicle visual sensor, or a vehicle inertial sensor.

Specifically, the terminal may obtain the satellite-related feature obtained by performing first feature extraction on satellite information, the satellite information being provided by a pre-defined satellite for positioning the autonomous vehicle. The terminal may obtain a sensor-related feature obtained by performing second feature extraction on sensor information, the sensor information being information acquired by the vehicle sensor disposed on the autonomous vehicle for the autonomous vehicle. Then, the terminal may predict positioning accuracy of the pre-defined satellite based on the satellite-related feature and the sensor-related feature. The positioning accuracy is used as a fusion reference parameter to fuse the sensor positioning information and the satellite positioning information in the satellite information, to obtain fused positioning information of the autonomous vehicle, and the sensor positioning information is obtained by performing positioning prediction on the autonomous vehicle based on the sensor information.

The vehicle velocity sensor may be configured to obtain vehicle velocity information and driving direction information of the vehicle. The vehicle visual sensor may be configured to obtain image information including a lane line or an obstacle. The vehicle inertial sensor may be configured to obtain acceleration information and angular velocity information of the vehicle.

In the foregoing embodiment, the positioning information processing method in this application is applied to the autonomous driving scenario, so that the positioning accuracy of the autonomous vehicle in the autonomous driving scenario can be improved.

In an embodiment, as shown in FIG. 5, in a training stage, the terminal may obtain satellite information, sensor information, initial fused positioning information, and truth-value information that are for generating training samples. The availability determining model and the accuracy prediction model are trained based on the generated corresponding samples. In a prediction stage, the terminal may obtain the satellite information, the sensor information, and the initial fused positioning information that are for predicting the positioning accuracy of the pre-defined satellite, perform first feature extraction based on the satellite information, the sensor information, and the initial fused positioning information, and first perform availability determining of the satellite positioning information based on the extracted feature through the availability determining model. If the satellite positioning information is determined to be available, the terminal further performs positioning accuracy prediction based on the extracted feature through the accuracy prediction model. If the satellite positioning information is determined to be unavailable, the terminal directly outputs prompt information representing the satellite positioning information being unavailable.

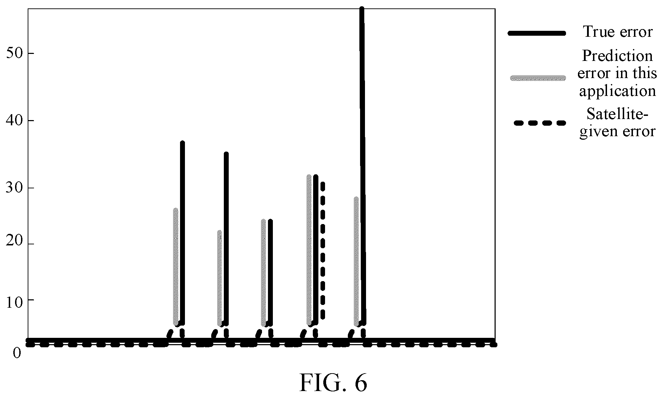

In an embodiment, the positioning accuracy is usually represented by a positioning error. As shown in FIG. 6, a positioning error directly given by a satellite is significantly different from a true positioning error, that is, the positioning accuracy directly provided by the satellite is less accurate. However, the predicted positioning error of this application is slightly different from the true positioning error, that is, the predicted positioning accuracy of this application is more accurate than positioning accuracy directly provided by a conventional satellite.

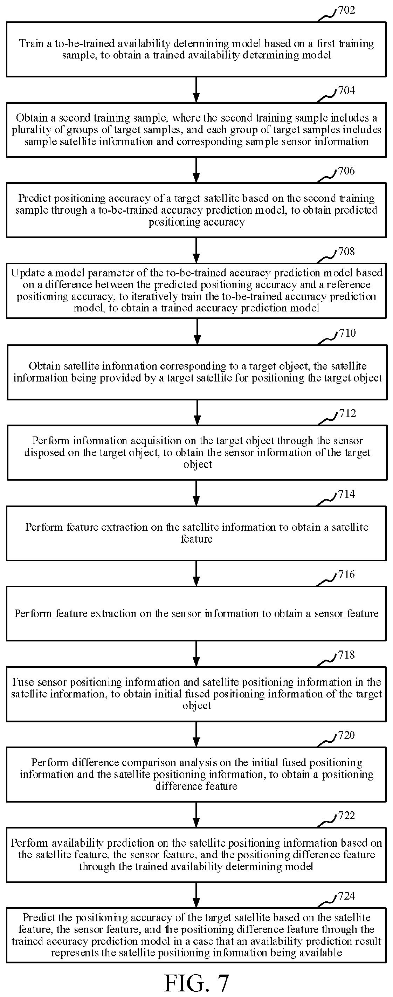

As shown in FIG. 7, in an embodiment, a positioning information processing method is provided. In this embodiment, an example in which the method is applied to the terminal 102 shown in FIG. 1 is used for description. The method specifically includes the following operations.

Operation 702: Train a to-be-trained availability determining model based on a first training sample, to obtain a trained availability determining model. The first training sample includes a plurality of groups of positive samples and a plurality of groups of negative samples, where each group of positive samples includes positive sample satellite information and corresponding positive sample sensor information; a long-distance difference condition is met between positive sample satellite positioning information in the positive sample satellite information and reference positioning information; the positive sample sensor information is sensor information acquired within a first target time period; and the first target time period is a time period from a time point at which satellite information is previously acquired to a time point at which the positive sample satellite information is acquired; and each group of negative samples includes negative sample satellite information and corresponding negative sample sensor information; a first close-distance difference condition is met between negative sample satellite positioning information in the negative sample satellite information and the reference positioning information; the negative sample sensor information is sensor information acquired within a second target time period; and the second target time period is a time period from a time point at which satellite information is previously acquired to a time point at which the negative sample satellite information is acquired.

In an embodiment, each group of positive samples further includes positive sample fused positioning information; the positive sample fused positioning information is obtained by fusing positive sample sensor positioning information and the positive sample satellite positioning information; and the positive sample sensor positioning information is obtained by performing positioning prediction on the pre-defined object based on the positive sample sensor information. Each group of negative samples further includes negative sample fusion positioning information; the negative sample fused positioning information is obtained by fusing negative sample sensor positioning information and the negative sample satellite positioning information; and the negative sample sensor positioning information is obtained by performing positioning prediction on the pre-defined object based on the negative sample sensor information.

Operation 704: Obtain a second training sample, where the second training sample includes a plurality of groups of target samples, and each group of target samples includes sample satellite information and corresponding sample sensor information. A second close-distance difference condition is met between sample satellite positioning information in the sample satellite information and reference positioning information; the sample sensor information is sensor information acquired within a third target time period; and the third target time period is a time period from a time point at which satellite information is previously acquired to a time point at which the sample satellite information is acquired.

Operation 706: Predict the positioning accuracy of the pre-defined satellite based on the second training sample through a to-be-trained accuracy prediction model, to obtain predicted positioning accuracy.

Operation 708: Update a model parameter of the to-be-trained accuracy prediction model based on a difference between the predicted positioning accuracy and reference positioning accuracy, to iteratively train the to-be-trained accuracy prediction model, to obtain a trained accuracy prediction model. The reference positioning accuracy is determined based on a difference between the sample satellite positioning information and the reference positioning information.

In an embodiment, each group of target samples further includes sample fused positioning information; the sample fused positioning information is obtained by fusing sample sensor positioning information and the sample satellite positioning information; and the sample sensor positioning information is obtained by performing positioning prediction on the pre-defined object based on the sample sensor information.

Operation 710: Obtain satellite information corresponding to a pre-defined object, the satellite information being provided by a pre-defined satellite for positioning the pre-defined object.

Operation 712: Perform information acquisition on the pre-defined object through a sensor disposed on the pre-defined object, to obtain sensor information for the pre-defined object.

Operation 714: Perform first feature extraction on the satellite information to obtain a satellite-related feature.

In an embodiment, the satellite information includes a satellite azimuth angle, a satellite pitch angle, and a satellite signal-to-noise ratio; the satellite-related feature includes a satellite distribution feature; and the number of pre-defined satellites is two or more. For each pre-defined satellite, location information of the pre-defined satellite is determined based on a satellite azimuth angle and a satellite pitch angle of the pre-defined satellite, and a region in which the pre-defined satellite is located is determined based on the location information. For each region, a satellite distribution sub-feature corresponding to the region is determined based on satellite signal-to-noise ratios and location information respectively corresponding to satellites of the same constellation in the region. The satellites of the same constellation are pre-defined satellites located in the region and belonging to the same constellation. The satellite distribution feature is determined based on the satellite distribution sub-features respectively corresponding to the regions.

In an embodiment, the number of pre-defined satellites is two or more. The satellite information includes at least one of a satellite azimuth angle, a satellite pitch angle, or a satellite signal-to-noise ratio. The satellite-related feature includes at least one of a satellite azimuth angle feature, a signal-to-noise ratio mean feature, a signal-to-noise ratio median feature, or a signal-to-noise ratio feature, where the satellite azimuth angle feature is determined based on satellite azimuth angles respectively corresponding to the pre-defined satellites; the signal-to-noise ratio mean feature is determined based on a mean of satellite signal-to-noise ratios respectively corresponding to satellites with a large pitch angle, where the satellite with a large pitch angle is a pre-defined satellite with a satellite pitch angle greater than a preset pitch angle; the signal-to-noise ratio median feature is determined by calculating a median of satellite signal-to-noise ratios respectively corresponding to the pre-defined satellites; and the signal-to-noise ratio feature is determined based on a ratio of a target number to a total number of satellites, where the target number is the number of pre-defined satellites with the satellite signal-to-noise ratio less than a preset signal-to-noise ratio, and the total number of satellites is the number of pre-defined satellites.

Operation 716: Perform second feature extraction on the sensor information to obtain a sensor-related feature.

Operation 718: Fuse the sensor positioning information and the satellite positioning information in the satellite information, to obtain initial fused positioning information of the pre-defined object.

Operation 720: Perform difference comparison analysis on the initial fused positioning information and the satellite positioning information, to obtain a positioning difference feature.

In an embodiment, the initial fused positioning information includes initial fused latitude and longitude information; the satellite positioning information includes satellite positioning latitude and longitude information; and the positioning difference feature includes a latitude and longitude difference feature. Latitude and longitude difference comparison analysis is performed on the initial fused latitude and longitude information and the satellite positioning latitude and longitude information, to obtain the latitude and longitude difference feature.

In an embodiment, the initial fused positioning information includes initial fused velocity information; the satellite positioning information includes satellite positioning velocity information; and the positioning difference feature includes a velocity difference feature. Velocity difference information between the initial fused velocity information and the satellite positioning velocity information is determined; and the velocity difference feature is determined based on a ratio of the velocity difference information to the initial fused velocity information.

Operation 722: Perform availability prediction on the satellite positioning information based on the satellite-related feature the sensor-related feature, and the positioning difference feature through the trained availability determining model.

Operation 724: Predict the positioning accuracy of the pre-defined satellite based on the satellite-related feature, the sensor-related feature, and the positioning difference feature through the trained accuracy prediction model in a case that an availability prediction result represents the satellite positioning information being available.

This application further provides an application scenario, and the foregoing positioning information processing method is applied to the application scenario. Specifically, the positioning information processing method may be applied to a scenario of positioning an autonomous vehicle in autonomous driving. The terminal may train a to-be-trained availability determining model based on a first training sample, to obtain a trained availability determining model. The first training sample includes a plurality of groups of positive samples and a plurality of groups of negative samples, where each group of positive samples includes positive sample satellite information and corresponding positive sample sensor information; a long-distance difference condition is met between positive sample satellite positioning information in the positive sample satellite information and reference positioning information; the positive sample sensor information is sensor information acquired within a first target time period; and the first target time period is a time period from a time point at which satellite information is previously acquired to a time point at which the positive sample satellite information is acquired; and each group of negative samples includes negative sample satellite information and corresponding negative sample sensor information; a first close-distance difference condition is met between negative sample satellite positioning information in the negative sample satellite information and the reference positioning information; the negative sample sensor information is sensor information acquired within a second target time period; and the second target time period is a time period from a time point at which satellite information is previously acquired to a time point at which the negative sample satellite information is acquired. Each group of positive samples further includes positive sample fused positioning information; the positive sample fused positioning information is obtained by fusing positive sample sensor positioning information and the positive sample satellite positioning information; and the positive sample sensor positioning information is obtained by performing positioning prediction on the autonomous vehicle based on the positive sample sensor information. Each group of negative samples further includes negative sample fusion positioning information; the negative sample fused positioning information is obtained by fusing negative sample sensor positioning information and the negative sample satellite positioning information; and the negative sample sensor positioning information is obtained by performing positioning prediction on the autonomous vehicle based on the negative sample sensor information.

The terminal may obtain a second training sample, where the second training sample includes a plurality of groups of target samples; each group of target samples includes sample satellite information and corresponding sample sensor information; a second close-distance difference condition is met between sample satellite positioning information in the sample satellite information and reference positioning information; the sample sensor information is sensor information acquired within a third target time period; and the third target time period is a time period from a time point at which satellite information is previously acquired to a time point at which the sample satellite information is acquired; predict positioning accuracy of the pre-defined satellite based on the second training sample through a to-be-trained accuracy prediction model, to obtain predicted positioning accuracy; and update a model parameter of the to-be-trained accuracy prediction model based on a difference between the predicted positioning accuracy and the reference positioning accuracy, to iteratively train the to-be-trained accuracy prediction model, to obtain a trained accuracy prediction model; and the reference positioning accuracy is determined based on a difference between the sample satellite positioning information and the reference positioning information. Each group of target samples further includes sample fusion positioning information, where the sample fused positioning information is obtained by fusing sample sensor positioning information and the sample satellite positioning information; and the sample sensor positioning information is obtained by performing positioning prediction on the autonomous vehicle based on the sample sensor information.

The terminal may obtain the satellite information corresponding to the pre-defined object, and perform first feature extraction on the satellite information to obtain a satellite-related feature. The satellite information is provided by the pre-defined satellite for positioning the autonomous vehicle. The satellite information includes a satellite azimuth angle, a satellite pitch angle, and a satellite signal-to-noise ratio; the satellite-related feature includes a satellite distribution feature; and the number of pre-defined satellites is two or more. For each pre-defined satellite, location information of the pre-defined satellite is determined based on a satellite azimuth angle and a satellite pitch angle of the pre-defined satellite, and a region in which the pre-defined satellite is located is determined based on the location information. For each region, a satellite distribution sub-feature corresponding to the region is determined based on satellite signal-to-noise ratios and location information respectively corresponding to satellites of the same constellation in the region. The satellites of the same constellation are pre-defined satellites located in the region and belonging to the same constellation. The satellite distribution feature is determined based on the satellite distribution sub-features respectively corresponding to the regions.

The satellite information may further include at least one of the satellite azimuth angle, the satellite pitch angle, or the satellite signal-to-noise ratio. The satellite-related feature includes at least one of a satellite azimuth angle feature, a signal-to-noise ratio mean feature, a signal-to-noise ratio median feature, or a signal-to-noise ratio feature, where the satellite azimuth angle feature is determined based on satellite azimuth angles respectively corresponding to the pre-defined satellites; the signal-to-noise ratio mean feature is determined based on a mean of satellite signal-to-noise ratios respectively corresponding to satellites with a large pitch angle, where the satellite with a large pitch angle is a pre-defined satellite with a satellite pitch angle greater than a preset pitch angle; the signal-to-noise ratio median feature is determined by calculating a median of satellite signal-to-noise ratios respectively corresponding to the pre-defined satellites; and the signal-to-noise ratio feature is determined based on a ratio of a target number to a total number of satellites, where the target number is the number of pre-defined satellites with the satellite signal-to-noise ratio less than a preset signal-to-noise ratio, and the total number of satellites is the number of pre-defined satellites.

The terminal may perform second feature extraction on the sensor information to obtain a sensor-related feature, where the sensor information is information acquired by the vehicle sensor disposed on the autonomous vehicle for the autonomous vehicle; fuse the sensor positioning information and the satellite positioning information in the satellite information, to obtain initial fused positioning information of the autonomous vehicle; and perform difference comparison analysis on the initial fused positioning information and the satellite positioning information, to obtain a positioning difference feature. The initial fused positioning information includes initial fused latitude and longitude information. the satellite positioning information includes satellite positioning latitude and longitude information; and the positioning difference feature includes a latitude and longitude difference feature. Latitude and longitude difference comparison analysis is performed on the initial fused latitude and longitude information and the satellite positioning latitude and longitude information, to obtain the latitude and longitude difference feature. The initial fused positioning information includes initial fused velocity information; the satellite positioning information includes satellite positioning velocity information; and the positioning difference feature includes a velocity difference feature. Velocity difference information between the initial fused velocity information and the satellite positioning velocity information is determined; and the velocity difference feature is determined based on a ratio of the velocity difference information to the initial fused velocity information.

The terminal may perform availability prediction on the satellite positioning information based on the satellite-related feature, the sensor-related feature, and the positioning difference feature through the trained availability determining model. predict the positioning accuracy of the pre-defined satellite based on the satellite-related feature, the sensor-related feature, and the positioning difference feature through the trained accuracy prediction model in a case that an availability prediction result represents the satellite positioning information being available.

The predicted positioning accuracy may be configured for fusing the sensor positioning information and the satellite positioning information in the satellite information. The sensor positioning information is obtained by performing positioning prediction on the autonomous vehicle based on the sensor information. Through the positioning information processing method of this application, more accurate satellite positioning accuracy can be obtained, so that more accurate fused positioning information of the autonomous vehicle can be obtained based on the more accurate satellite positioning accuracy, thereby improving positioning accuracy of the autonomous vehicle.

The accurate positioning accuracy predicted in this application may further be provided to a third party, so that the third party verifies whether the positioning accuracy obtained by the third party is accurate.

This application further provides another application scenario, and the foregoing positioning information processing method is applied to the application scenario. Specifically, the positioning information processing method may be applied to a scenario of positioning an assisted driving vehicle in assisted driving. In an assisted driving scenario, the assisted driving vehicle may also need to be positioned to determine a location of the assisted driving vehicle. Through the positioning information processing method of this application, more accurate satellite positioning accuracy can be obtained, so that more accurate fused positioning information of the assisted driving vehicle can be obtained based on the more accurate satellite positioning accuracy, thereby improving positioning accuracy of the assisted driving vehicle. The positioning information processing method in this application may further be applied to a navigation scenario in a vehicle driving process, a positioning scenario for a robot other than a vehicle, or the like. Through the positioning information processing method of this application, more accurate satellite positioning accuracy can be obtained, so that more accurate fused positioning information of the vehicle or another robot can be obtained based on the more accurate satellite positioning accuracy, thereby improving positioning accuracy of the vehicle or another robot.

Although the operations in the flowcharts of the embodiments are displayed sequentially, these operations are not necessarily performed sequentially. Unless otherwise explicitly specified in this specification, execution of the operations is not strictly limited, and the operations may be performed in other sequences. In addition, at least a part of the operations in the foregoing embodiments may include a plurality of sub-operations or a plurality of stages. These sub-operations or stages are not necessarily performed and completed at the same moment, and may be performed at different moments. Besides, the sub-operations or stages may not be necessarily performed sequentially, and may be performed in turn or alternately with other operations or at least a part of sub-operations or stages of other operations.

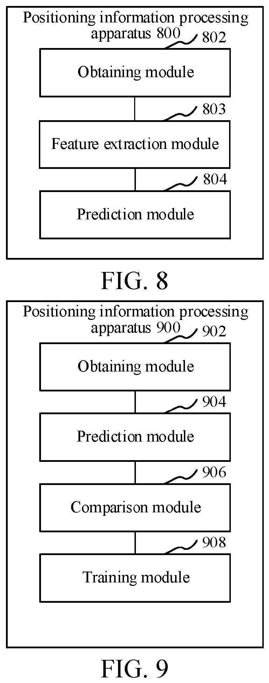

In an embodiment, as shown in FIG. 8, a positioning information processing apparatus 800 is provided. The apparatus may adopt a software module or a hardware module, or become a part of a computer device by a combination of the two. The apparatus specifically includes:

an obtaining module 802, configured to: obtain satellite information corresponding to a pre-defined object, the satellite information being provided by a pre-defined satellite for positioning the pre-defined object, and a sensor being disposed on the pre-defined object; and obtain sensor information acquired by the sensor for the pre-defined object;

a feature extraction module 803, configured to: perform first feature extraction on the satellite information to obtain a satellite-related feature; and perform second feature extraction on the sensor information to obtain a sensor-related feature; and

a prediction module 804, configured to predict positioning accuracy of the pre-defined satellite based on the satellite-related feature and the sensor-related feature.

In an embodiment, the apparatus further includes: a comparison module, configured to: obtain sensor positioning information, and fuse the sensor positioning information and the satellite positioning information in the satellite information, to obtain initial fused positioning information of the pre-defined object, where the sensor positioning information is obtained by performing positioning prediction on the pre-defined object based on the sensor information; and

perform difference comparison analysis on the initial fused positioning information and the satellite positioning information, to obtain a positioning difference feature; and

the prediction module 804 is further configured to predict positioning accuracy of the pre-defined satellite based on the satellite-related feature, the sensor-related feature, and the positioning difference feature.

In an embodiment, the initial fused positioning information includes initial fused latitude and longitude information; the satellite positioning information includes satellite positioning latitude and longitude information; and the positioning difference feature includes a latitude and longitude difference feature. The comparison module is further configured to perform latitude and longitude difference comparison analysis on the initial fused latitude and longitude information and the satellite positioning latitude and longitude information, to obtain the latitude and longitude difference feature.

In an embodiment, the initial fused positioning information includes initial fused velocity information; the satellite positioning information includes satellite positioning velocity information; and the positioning difference feature includes a velocity difference feature. The comparison module is further configured to: determine velocity difference information between the initial fused velocity information and the satellite positioning velocity information; and determine the velocity difference feature based on a ratio of the velocity difference information to the initial fused velocity information.

In an embodiment, the satellite information includes a satellite azimuth angle, a satellite pitch angle, and a satellite signal-to-noise ratio; the satellite-related feature includes a satellite distribution feature; and the number of pre-defined satellites is two or more. The feature extraction module 803 is further configured to determine, for each pre-defined satellite, location information of the pre-defined satellite based on a satellite azimuth angle and a satellite pitch angle of the pre-defined satellite, and determine, based on the location information, a region in which the pre-defined satellite is located. For each region, a satellite distribution sub-feature corresponding to the region is determined based on satellite signal-to-noise ratios and location information respectively corresponding to satellites of the same constellation in the region. The satellites of the same constellation are pre-defined satellites located in the region and belonging to the same constellation. The satellite distribution feature is determined based on the satellite distribution sub-features respectively corresponding to the regions.

In an embodiment, the region includes a quadrant in which the pre-defined satellite is located; and the feature extraction module 803 is further configured to: project, for each pre-defined satellite, the pre-defined satellite onto a plane based on the satellite azimuth angle and the satellite pitch angle of the pre-defined satellite, to obtain location information of the pre-defined satellite on the plane, where the plane includes a plurality of quadrants; and determine, based on the location information of the pre-defined satellite on the plane, a quadrant in which the pre-defined satellite is located on the plane.

In an embodiment, the number of pre-defined satellites is two or more. The satellite information includes at least one of a satellite azimuth angle, a satellite pitch angle, or a satellite signal-to-noise ratio. The satellite-related feature includes at least one of a satellite azimuth angle feature, a signal-to-noise ratio mean feature, a signal-to-noise ratio median feature, or a signal-to-noise ratio feature, where the satellite azimuth angle feature is determined based on satellite azimuth angles respectively corresponding to the pre-defined satellites; the signal-to-noise ratio mean feature is determined based on a mean of satellite signal-to-noise ratios respectively corresponding to satellites with a large pitch angle, where the satellite with a large pitch angle is a pre-defined satellite with a satellite pitch angle greater than a preset pitch angle; the signal-to-noise ratio median feature is determined by calculating a median of satellite signal-to-noise ratios respectively corresponding to the pre-defined satellites; and the signal-to-noise ratio feature is determined based on a ratio of a target number to a total number of satellites, where the target number is the number of pre-defined satellites with the satellite signal-to-noise ratio less than a preset signal-to-noise ratio, and the total number of satellites is the number of pre-defined satellites.

In an embodiment, the prediction module 804 is further configured to: perform availability prediction on the satellite positioning information based on the satellite-related feature and the sensor-related feature; and predict the positioning accuracy of the pre-defined satellite based on the satellite-related feature and the sensor-related feature in a case that an availability prediction result represents the satellite positioning information being available.

In an embodiment, the availability prediction result is obtained through prediction by an availability determining model, and the availability determining model is obtained through training based on a first training sample. The first training sample includes a plurality of groups of positive samples and a plurality of groups of negative samples, where each group of positive samples includes positive sample satellite information and corresponding positive sample sensor information; a long-distance difference condition is met between positive sample satellite positioning information in the positive sample satellite information and reference positioning information; the positive sample sensor information is sensor information acquired within a first target time period; and the first target time period is a time period from a time point at which satellite information is previously acquired to a time point at which the positive sample satellite information is acquired; and each group of negative samples includes negative sample satellite information and corresponding negative sample sensor information; a first close-distance difference condition is met between negative sample satellite positioning information in the negative sample satellite information and the reference positioning information; the negative sample sensor information is sensor information acquired within a second target time period; and the second target time period is a time period from a time point at which satellite information is previously acquired to a time point at which the negative sample satellite information is acquired.

In an embodiment, each group of positive samples further includes positive sample fused positioning information; the positive sample fused positioning information is obtained by fusing positive sample sensor positioning information and the positive sample satellite positioning information; and the positive sample sensor positioning information is obtained by performing positioning prediction on the pre-defined object based on the positive sample sensor information. Each group of negative samples further includes negative sample fusion positioning information; the negative sample fused positioning information is obtained by fusing negative sample sensor positioning information and the negative sample satellite positioning information; and the negative sample sensor positioning information is obtained by performing positioning prediction on the pre-defined object based on the negative sample sensor information.

In an embodiment, the positioning accuracy is obtained through prediction by a trained accuracy prediction model. The apparatus further includes: an obtaining module, configured to: obtain a second training sample, where the second training sample includes a plurality of groups of target samples; each group of target samples includes sample satellite information and corresponding sample sensor information; a second close-distance difference condition is met between sample satellite positioning information in the sample satellite information and reference positioning information; the sample sensor information is sensor information acquired within a third target time period; and the third target time period is a time period from a time point at which satellite information is previously acquired to a time point at which the sample satellite information is acquired; predict positioning accuracy of the pre-defined satellite based on the second training sample through a to-be-trained accuracy prediction model, to obtain predicted positioning accuracy; and update a model parameter of the to-be-trained accuracy prediction model based on a difference between the predicted positioning accuracy and the reference positioning accuracy, to iteratively train the to-be-trained accuracy prediction model, where the reference positioning accuracy is determined based on a difference between the sample satellite positioning information and the reference positioning information.

In an embodiment, each group of target samples further includes sample fused positioning information; the sample fused positioning information is obtained by fusing sample sensor positioning information and the sample satellite positioning information; and the sample sensor positioning information is obtained by performing positioning prediction on the pre-defined object based on the sample sensor information.

In an embodiment, the positioning accuracy is configured for fusing the sensor positioning information and the satellite positioning information in the satellite information; and the sensor positioning information is obtained by predicting performing positioning prediction on the pre-defined object based on the sensor information.

In an embodiment, the pre-defined object is an autonomous vehicle in an autonomous driving scenario. The sensor is a vehicle sensor disposed on the autonomous vehicle. The vehicle sensor includes at least one of a vehicle velocity sensor, a vehicle visual sensor, or a vehicle inertial sensor.

In an embodiment, referring to FIG. 9, in addition to the obtaining module 802, the feature extraction module 803, and the prediction module 804, the positioning information processing apparatus 900 may further include a comparison module 806 and a training module 808.

The positioning information processing apparatus obtains the satellite information corresponding to the pre-defined object, the satellite information being provided by the pre-defined satellite for positioning the pre-defined object; performs information acquisition on the pre-defined object through the sensor disposed on the pre-defined object, to obtain the sensor information of the pre-defined object; performs first feature extraction on the satellite information to obtain the satellite-related feature; performs second feature extraction on the sensor information to obtain a sensor-related feature; and predicts the positioning accuracy of the pre-defined satellite based on the satellite-related feature and the sensor-related feature. Because the satellite positioning accuracy is determined in consideration of both the satellite information from the pre-defined satellite and the sensor information from the sensor, compared with the conventional manner of directly determining accuracy information received from the satellite as final positioning accuracy of satellite positioning, more accurate satellite positioning accuracy can be obtained in this application, so that more accurate fused positioning information of the pre-defined object can be obtained based on the more accurate satellite positioning accuracy, thereby improving the positioning accuracy for the pre-defined object.

The modules in the positioning information processing apparatus may be implemented in whole or in part by software, hardware, and a combination thereof. The foregoing modules may be built in or independent of a processor of a computer device in a hardware form, or may be stored in a memory of the computer device in a software form, so that the processor invokes and performs an operation corresponding to each of the foregoing modules.

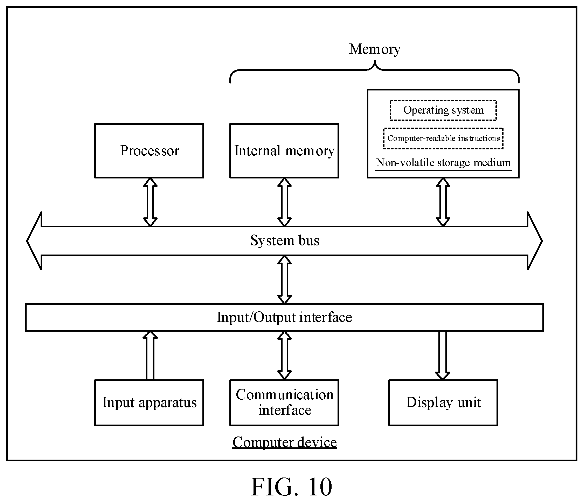

In an embodiment, a computer device is provided. The computer device may be a terminal, and an internal structure diagram thereof may be shown in FIG. 10. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and computer-readable instructions. The internal memory provides an environment for running of the operating system and the computer-readable instructions in the non-volatile storage medium. The input/output interface of the computer device is configured to exchange information between the processor and an external device. The communication interface of the computer device is configured to communicate with an external terminal in a wired or a wireless manner, and the wireless manner can be implemented by using WIFI, a mobile cellular network, an NFC (near field communication), or other technologies. The computer-readable instructions are executed by the processor to implement the positioning information processing method. The display unit of the computer device is configured to form a visually visible picture, and may be a display screen, a projection apparatus, or a virtual reality imaging apparatus. The display screen may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that, the structure shown in FIG. 10 is only a block diagram of a part of a structure related to a solution of this application and does not limit the computer device to which the solution of this application is applied. Specifically, the computer device may include more or fewer components than those in the drawings, or some components are combined, or a different component deployment is used.

In an embodiment, a computer device is provided, including a memory and a processor, the memory storing computer-readable instructions, the processor, when executing the computer-readable instructions, implementing the operations in the foregoing method embodiments.

In an embodiment, a computer-readable storage medium is provided, having computer-readable instructions stored therein, the computer-readable instructions, when executed by a processor, implementing the operations in the foregoing method embodiments.

In an embodiment, a computer program product is provided, having computer-readable instructions stored therein, the computer-readable instructions, when executed by a processor, implementing the operations in the foregoing method embodiments.

The user information (including, but not limited to, user equipment information, user personal information, and the like) and the data (including, but not limited to, data for analysis, stored data, displayed data, and the like) involved in this application all are information and data authorized by the user or fully authorized by each party, and the acquisition, use, and processing of relevant data need to comply with relevant laws and regulations of relevant countries and regions.

A person of ordinary skill in the art may understand that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to a memory, a storage, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, and the like. The volatile memory may include a random access memory (RAM) or an external cache. For the purpose of description instead of limitation, the RAM is available in a plurality of forms, such as a static random access memory (SRAM) or a dynamic random access memory (DRAM).

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments only describe several implementations of this application, which are described specifically and in detail, but cannot be construed as a limitation to the patent scope of this application. A person of ordinary skill in the art may make various changes and improvements without departing from the ideas of this application, which shall all fall within the protection scope of this application. Therefore, the protection scope of this patent application is subject to the protection scope of the appended claims.

**Claims**

1. A positioning information processing method, performed by a computer device, the method comprising:

   obtaining satellite information corresponding to a pre-defined object, the satellite information being provided by a pre-defined satellite for positioning the pre-defined object ;
   obtaining sensor information acquired by a sensor disposed on the pre-defined object;
   performing first feature extraction on the satellite information to obtain a satellite-related feature;
   performing second feature extraction on the sensor information to obtain a sensor-related feature; and
   predicting positioning accuracy of the pre-defined satellite based on the satellite-related feature and the sensor-related feature.

2. The method according to claim 1, further comprising:

   obtaining sensor positioning information, and fusing the sensor positioning information and satellite positioning information in the satellite information, to obtain initial fused positioning information of the pre-defined object, wherein the sensor positioning information is obtained by performing positioning prediction on the pre-defined object based on the sensor information; and
   performing difference comparison analysis on the initial fused positioning information and the satellite positioning information, to obtain a positioning difference feature; and
   the predicting positioning accuracy of the pre-defined satellite based on the satellite-related feature and the sensor-related feature comprises:
   predicting the positioning accuracy of the pre-defined satellite based on the satellite-related feature, the sensor-related feature, and the positioning difference feature.

3. The method according to claim 2, wherein the initial fused positioning information comprises initial fused latitude and longitude information; the satellite positioning information comprises satellite positioning latitude and longitude information; and the positioning difference feature comprises a latitude and longitude difference feature; and the performing difference comparison analysis on the initial fused positioning information and the satellite positioning information, to obtain a positioning difference feature comprises:
performing latitude and longitude difference comparison analysis on the initial fused latitude and longitude information and the satellite positioning latitude and longitude information, to obtain the latitude and longitude difference feature.

4. The method according to claim 2 or 3, wherein the initial fused positioning information comprises initial fused velocity information; the satellite positioning information comprises satellite positioning velocity information; and the positioning difference feature comprises a velocity difference feature; and the performing difference comparison analysis on the initial fused positioning information and the satellite positioning information, to obtain a positioning difference feature comprises:

determining velocity difference information between the initial fused velocity information and the satellite positioning velocity information; and
determining the velocity difference feature based on a ratio of the velocity difference information to the initial fused velocity information.

5. The method according to any one of claims 1 to 4, wherein the satellite information comprises a satellite azimuth angle, a satellite pitch angle, and a satellite signal-to-noise ratio; the satellite-related feature comprises a satellite distribution feature; and the number of pre-defined satellites is two or more; and the performing first feature extraction on the satellite information to obtain a satellite-related feature comprises:

determining, for each pre-defined satellite, location information of the pre-defined satellite based on a satellite azimuth angle and a satellite pitch angle of the pre-defined satellite, and determining, based on the location information, a region in which the pre-defined satellite is located;
obtaining, for each region, a satellite signal-to-noise ratio and location information respectively corresponding to pre-defined satellites belonging to the same constellation in the region, and determining a satellite distribution sub-feature corresponding to the region based on the obtained satellite signal-to-noise ratio and location information; and
determining the satellite distribution feature based on the satellite distribution sub-features respectively corresponding to the regions.

6. The method according to claim 5, wherein the region comprises a quadrant in which the pre-defined satellite is located; and the determining, for each pre-defined satellite, location information of the pre-defined satellite based on a satellite azimuth angle and a satellite pitch angle of the pre-defined satellite, and determining, based on the location information, a region in which the pre-defined satellite is located comprises:

projecting, for each pre-defined satellite, the pre-defined satellite onto a plane based on the satellite azimuth angle and the satellite pitch angle of the pre-defined satellite, to obtain location information of the pre-defined satellite on the plane, wherein the plane comprises a plurality of quadrants; and
determining, based on the location information of the pre-defined satellite on the plane, a quadrant in which the pre-defined satellite is located on the plane.

7. The method according to any one of claims 1 to 6, wherein the number of pre-defined satellites is two or more; the satellite information comprises at least one of the satellite azimuth angle, the satellite pitch angle, or the satellite signal-to-noise ratio; the satellite-related feature comprises at least one of a satellite azimuth angle feature, a signal-to-noise ratio mean feature, a signal-to-noise ratio median feature, or a signal-to-noise ratio feature, wherein the satellite azimuth angle feature is determined based on satellite azimuth angles respectively corresponding to the pre-defined satellites; the signal-to-noise ratio mean feature is determined based on a mean of satellite signal-to-noise ratios respectively corresponding to satellites with a large pitch angle, wherein the satellite with a large pitch angle is a pre-defined satellite with a satellite pitch angle greater than a preset pitch angle; the signal-to-noise ratio median feature is determined by calculating a median of satellite signal-to-noise ratios respectively corresponding to the pre-defined satellites; and the signal-to-noise ratio feature is determined based on a ratio of a target number to a total number of satellites, wherein the target number is the number of pre-defined satellites with the satellite signal-to-noise ratio less than a preset signal-to-noise ratio, and the total number of satellites is the number of pre-defined satellites.

8. The method according to any one of claims 1 to 7, further comprising:

performing availability prediction on the satellite positioning information based on the satellite-related feature and the sensor-related feature; and

performing the operation of predicting positioning accuracy of the pre-defined satellite based on the satellite-related feature and the sensor-related feature in a case that an availability prediction result represents the satellite positioning information being available.

9. The method according to claim 8, wherein the availability prediction result is obtained through prediction by an availability determining model, and the availability determining model is obtained through training based on a first training sample; the first training sample comprises a plurality of groups of positive samples and a plurality of groups of negative samples, wherein

each group of positive samples comprises positive sample satellite information and corresponding positive sample sensor information; a long-distance difference condition is met between positive sample satellite positioning information in the positive sample satellite information and reference positioning information; the positive sample sensor information is sensor information acquired within a first target time period; and the first target time period is a time period from a time point at which satellite information is previously acquired to a time point at which the positive sample satellite information is acquired; and

each group of negative samples comprises negative sample satellite information and corresponding negative sample sensor information; a first close-distance difference condition is met between negative sample satellite positioning information in the negative sample satellite information and the reference positioning information; the negative sample sensor information is sensor information acquired within a second target time period; and the second target time period is a time period from a time point at which satellite information is previously acquired to a time point at which the negative sample satellite information is acquired.

10. The method according to claim 9, wherein each group of positive samples further comprises positive sample fused positioning information; the positive sample fused positioning information is obtained by fusing positive sample sensor positioning information and the positive sample satellite positioning information; and the positive sample sensor positioning information is obtained by performing positioning prediction on the pre-defined object based on the positive sample sensor information; and

each group of negative samples further comprises negative sample fused positioning information; the negative sample fused positioning information is obtained by fusing negative sample sensor positioning information and the negative sample satellite positioning information; and the negative sample sensor positioning information is obtained by performing positioning prediction on the pre-defined object based on the negative sample sensor information.

11. The method according to any one of claims 1 to 10, wherein the positioning accuracy is obtained through prediction by a trained accuracy prediction model, wherein the accuracy prediction model is obtained through a training operation of the accuracy prediction model; and the training operation of the accuracy prediction model comprises:

obtaining a second training sample, wherein the second training sample comprises a plurality of groups of target samples; each group of target samples comprises sample satellite information and corresponding sample sensor information; a second close-distance difference condition is met between sample satellite positioning information in the sample satellite information and reference positioning information; the sample sensor information is sensor information acquired within a third target time period; and the third target time period is a time period from a time point at which satellite information is previously acquired to a time point at which the sample satellite information is acquired;

predicting positioning accuracy of the pre-defined satellite based on the second training sample through a to-be-trained accuracy prediction model, to obtain predicted positioning accuracy; and

updating a model parameter of the to-be-trained accuracy prediction model based on a difference between the predicted positioning accuracy and reference positioning accuracy prediction, to iteratively train the to-be-trained accuracy prediction model, wherein the reference positioning accuracy is determined based on a difference between the sample satellite positioning information and the reference positioning information.

12. The method according to claim 11, wherein each group of target samples further comprises sample fused positioning information; the sample fused positioning information is obtained by fusing sample sensor positioning information and the sample satellite positioning information; and the sample sensor positioning information is obtained by performing positioning prediction on the pre-defined object based on the sample sensor information.

13. The method according to any one of claims 1 to 12, wherein the positioning accuracy is configured for fusing the sensor positioning information and the satellite positioning information in the satellite information; and the sensor positioning information is obtained by performing positioning prediction on the pre-defined object based on the sensor information.

14. The method according to any one of claims 1 to 13, wherein the pre-defined object is an autonomous vehicle in an autonomous driving scenario; the sensor is a vehicle sensor disposed on the autonomous vehicle; and the vehicle sensor comprises at least one of a vehicle velocity sensor, a vehicle visual sensor, or a vehicle inertial sensor.

15. A positioning information processing apparatus, comprising:

an obtaining module, configured to: obtain satellite information corresponding to a pre-defined object, the satellite information being provided by a pre-defined satellite for positioning the pre-defined object; and obtain sensor information acquired by a sensor disposed on the pre-defined object;
a feature extraction module, configured to: perform first feature extraction on the satellite information to obtain a satellite-related feature; and perform second feature extraction on the sensor information to obtain a sensor-related feature; and
a prediction module, configured to predict positioning accuracy of the pre-defined satellite based on the satellite-related feature and the sensor-related feature.

16. A computer device, comprising a memory and a processor, the memory having computer-readable instructions stored therein, and the processor, when executing the computer-readable instructions, implementing the operations of the method according to any one of claims 1 to 14.

17. A computer-readable storage medium, having computer-readable instructions stored therein, the computer-readable instructions, when executed by a processor, implementing the operations of the method according to any one of claims 1 to 14.

18. A computer program product, comprising computer-readable instructions, the computer-readable instructions, when executed by a processor, implementing the operations of the method according to any one of claims 1 to 14.

FIG. 1

202

Obtain satellite information corresponding to a target object, the satellite information being provided by a target satellite for positioning the target object, and a sensor being disposed on the target object

204

Obtain sensor information acquired by the sensor for the target object

206

Perform feature extraction on the satellite information to obtain a satellite feature

208

Perform feature extraction on the sensor information to obtain a sensor feature

210

Predict positioning accuracy of the target satellite based on the satellite feature and the sensor feature

FIG. 2

302

Determine, for each target satellite, location information of the target satellite based on a satellite azimuth angle and a satellite pitch angle of the target satellite, and determine, based on the location information, a region in which the target satellite is located

304

Obtain, for each region, a satellite signal-to-noise ratio and location information respectively corresponding to target satellites belonging to the same constellation in the region, and determine a satellite distribution sub-feature corresponding to the region based on the obtained satellite signal-to-noise ratio and location information

306

Determine the satellite distribution feature based on the satellite distribution sub-features respectively corresponding to the regions

FIG. 3

FIG. 4

FIG. 5

FIG. 6

702

Train a to-be-trained availability determining model based on a first training sample, to obtain a trained availability determining model

704

Obtain a second training sample, where the second training sample includes a plurality of groups of target samples, and each group of target samples includes sample satellite information and corresponding sample sensor information

706

Predict positioning accuracy of a target satellite based on the second training sample through a to-be-trained accuracy prediction model, to obtain predicted positioning accuracy

708

Update a model parameter of the to-be-trained accuracy prediction model based on a difference between the predicted positioning accuracy and a reference positioning accuracy, to iteratively train the to-be-trained accuracy prediction model, to obtain a trained accuracy prediction model

710

Obtain satellite information corresponding to a target object, the satellite information being provided by a target satellite for positioning the target object

712

Perform information acquisition on the target object through the sensor disposed on the target object, to obtain the sensor information of the target object

714

Perform feature extraction on the satellite information to obtain a satellite feature

716

Perform feature extraction on the sensor information to obtain a sensor feature

718

Fuse sensor positioning information and satellite positioning information in the satellite information, to obtain initial fused positioning information of the target object

720

Perform difference comparison analysis on the initial fused positioning information and the satellite positioning information, to obtain a positioning difference feature

722

Perform availability prediction on the satellite positioning information based on the satellite feature, the sensor feature, and the positioning difference feature through the trained availability determining model

724

Predict the positioning accuracy of the target satellite based on the satellite feature, the sensor feature, and the positioning difference feature through the trained accuracy prediction model in a case that an availability prediction result represents the satellite positioning information being available

FIG. 7

Positioning information processing
apparatus 800 / 802

Obtaining module

/ 803

Feature extraction module

/ 804

Prediction module

FIG. 8

Positioning information processing
apparatus 900 / 902

Obtaining module

/ 904

Prediction module

/ 906

Comparison module

/ 908

Training module

FIG. 9

FIG. 10

## INTERNATIONAL SEARCH REPORT

| International application No. |
|---|
| **PCT/CN2023/121377** |

**A. CLASSIFICATION OF SUBJECT MATTER**

G01S19/42(2010.01)i; G01C21/20(2006.01)i; G01C21/16(2006.01)i

According to International Patent Classification (IPC) or to both national classification and IPC

**B. FIELDS SEARCHED**

Minimum documentation searched (classification system followed by classification symbols)

IPC: G01S G01C

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; IEEE: 卫星, 定位精度, 传感器, 特征, 提取, 预测, 估计, 评估, 融合, satellite, positioning precision, positioning accuracy, locating precision, predict+, evaluation, sensor? , GPS, BeiDou, BDS, Glonass, Galileo, GNASS

**C. DOCUMENTS CONSIDERED TO BE RELEVANT**

| Category* | Citation of document, with indication, where appropriate, of the relevant passages | Relevant to claim No. |
|---|---|---|
| X | JP 2012127899 A (ISUZU MOTORS LTD.) 05 July 2012 (2012-07-05) description, paragraphs [0004]-[0032], and figures 1-4 | 1, 13-18 |
| X | CN 217655294 U (PEOPLE'S LIBERATION ARMY STRATEGIC SUPPORT FORCE INFORMATION ENGINEERING UNIVERSITY) 25 October 2022 (2022-10-25) description, paragraphs [0002]-[0033], and figures 1-3 | 1, 13-18 |
| X | CN 107991691 A (WUHAN HUAZHONG TIANWEI MEASUREMENTS AND CONTROLS CO., LTD.) 04 May 2018 (2018-05-04) description, paragraphs [0004]-[0040], and figures 1-3 | 1, 15-18 |
| A | JP 2008157705 A (CLARION CO., LTD.) 10 July 2008 (2008-07-10) entire document | 1-18 |
| A | WO 2022121672 A1 (HUAWEI TECHNOLOGIES CO., LTD.) 16 June 2022 (2022-06-16) entire document | 1-18 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 November 2023** | **24 November 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121377**

| Patent document cited in search report | | | Publication date (day/month/year) | Patent family member(s) | | | Publication date (day/month/year) |
|---|---|---|---|---|---|---|---|
| JP | 2012127899 | A | 05 July 2012 | JP | 5601188 | B2 | 08 October 2014 |
| CN | 217655294 | U | 25 October 2022 | None | | | |
| CN | 107991691 | A | 04 May 2018 | None | | | |
| JP | 2008157705 | A | 10 July 2008 | None | | | |
| WO | 2022121672 | A1 | 16 June 2022 | None | | | |

Form PCT/ISA/210 (patent family annex) (July 2022)

**EP 4 614 192 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022117015013